# EUROPEAN PATENT APPLICATION

(11) **EP 4 653 346 A1**
(43) Date of publication of application: **26.11.2025**
(21) Application number: 25178560.6
(22) Date of filing: 23.05.2025
(51) Int. Cl.: B65G 11/20, B65G 47/14

(54) **DYNAMIC GEOMETRIC SORTING APPARATUS AND METHOD**

(30) Priority: 24.05.2024 US 202463651596 P
(71) Applicant: ATS Corporation, Cambridge, ON N3H 4R7 (CA)
(72) Inventor: MUNROE, Philip David, Cambridge, N3H 4R7 (CA); NICHOLSON, Kenneth Wayne, Cambridge, N3H 4R7 (CA); MACGREGOR, Robert James, Cambridge, N3H 4R7 (CA); SCHLOR, Michael, Cambridge, N3H 4R7 (CA)
(74) Representative: Noble, Nicholas

(57) **Abstract**

This disclosure presents a dynamic geometric sorting apparatus designed to organize variously shaped parts (10) efficiently. The system includes a receiving box (102) with an opening (104) for input and an output opening (105), a base plate (106) with alignment channels on an incline, and a box rake (130) that moves along the base plate (106). An actuator controls the rake's motion profile, aligning parts into channels. The base plate (106) extends beyond the box (102), featuring an extension for sorted parts exit. The apparatus adjusts the rake's speed based on its incline position and incorporates a hold down bar(110) to manage part rows during sorting. Additionally, the rake (130) has dividers of different sizes for part separation. The base plate's incline, actuator mechanisms, and a sensor bar (108) with sensors ensure efficient sorting. The method involves applying a motion profile to parts in the box, aligning them into channels, and releasing them once sorted.

## Description

### Cross-Reference To Related Applications

This application is related to U.S. Patent Application No. 63/651,596, filed on May 24, 2024, entitled "Dynamic Geometric Sorting Apparatus and Method", which is incorporated herein by reference in its entirety.

### Technical Field

The present invention relates to a sorting apparatus and method, and more particularly, to a dynamic geometric sorting apparatus and method for sorting parts in an manufacturing line process.

### Background

In certain manufacturing processes parts must be positioned in particular orientations to facilitate assembly or packaging of the parts. Sorting of parts can be done manually or automatically, using different types of sorting machines or devices. In a factory setting, speed and efficiency is desired in orientating parts in way that accommodates that factory assembly line process.

Solutions such as vibratory feeders have been used to orient parts or objects into particular feeding channels. Existing solutions, present challenges in efficiently orienting the articles in a consistent manner at high speeds. Geometric sorting machines typically use fixed or movable guides, slots, holes, or other means to separate items of different shapes or sizes.

However, conventional geometric sorting machines have some drawbacks, such as low efficiency, high cost, limited capacity, complex structure, or frequent maintenance.

Therefore, there is a need for an improved geometric sorting apparatus and method that can overcome these drawbacks.

### Summary

The disclosure provides a dynamic geometric sorting apparatus comprising a receiving box with input and output openings, a base plate with inclined alignment channels, a box rake traveling along the base plate, and an actuator that moves the box rake according to a motion profile. The system operates with varying speeds during upward and downward movement to optimize sorting efficiency. Key components include a hold down bar that retains secondary rows of parts during processing, an end gate creating separation between rows during part removal, and perpendicular dividers on the box rake in multiple sizes to sort parts into alignment channels. The apparatus features an inclined base plate configuration, electrical or mechanical actuator options, and a sensor bar with presence sensors to monitor channel capacity. This versatile system accommodates various three-dimensional shapes including cylindrical, rectangular, hexagonal, and octagonal parts, particularly those with a longer length to depth ratio. The corresponding method involves receiving parts in the receiving box, aligning them using the box rake's controlled motion profile, and managing the traffic flow within the channels. The process includes detecting when parts are properly sorted, releasing them when channels reach capacity, and utilizing the hold down bar and end gate to facilitate orderly removal while monitoring sorting status and pausing operations as needed to optimize processing for parts with specific dimensional characteristics.

### Brief Description of the Drawings

The invention will be described in more detail with reference to the accompanying drawings, in which:
FIG. 1 is a perspective view of a dynamic geometric sorting apparatus according to an embodiment;
FIG. 2 is a side view of the dynamic geometric sorting apparatus of FIG. 1;
FIG. 3 is a perspective view of the baseplate and box rake of the dynamic geometric sorting apparatus of FIG. 1;
FIG. 4A-4R are representation of the stages of operation of the dynamic geometric sorting apparatus of FIG. 1;
FIG. 5 is a representation of a motion profile of the dynamic geometric sorting apparatus; and
FIG. 6 is a flowchart of a method of dynamic geometric sorting according to an embodiment.

### Detailed Description

The following detailed description provides a thorough explanation of the invention, including its various components, features, and methods of operation. The description is intended to be illustrative and not restrictive.

The dynamic geometric sorting apparatus also includes a receiving box having an opening for receiving a plurality of parts and an output opening at a first end; a base plate positioned beneath the receiving box, the base plate may include a plurality of alignment channels for receiving the plurality of parts on an incline; a box rake within the receiving box travelling along a length of the base plate; and an actuator for moving of the box rake along a motion profile relative to the base plate to align the plurality of parts with the plurality of alignment channels, the box rake is driven along the motion profile to move up the incline of the base plate and down the incline of the of the base plate; where the base plate and the plurality of alignment channels extend beyond a length of the receiving box may include an extension portion allowing a sorted plurality of parts to exit from the receiving box via the output opening at the first end. Other embodiments of this aspect include corresponding computer systems, apparatus, and computer programs recorded on one or more computer storage devices, each configured to perform the actions of the methods.

Implementations may include one or more of the following features. The apparatus where the box rake is driven along the motion profile at a first speed while moving up the incline of the base plate and at a second speed while moving down the incline of the base plate. The apparatus may include a hold down bar retaining a second row of the plurality of parts while a first row of the plurality of parts in the extension portion is removed from the base plate. The box rake further may include a plurality of substantially perpendicular dividers to the base plate aligned between the plurality of alignment channels of the base plate positioned within the receiving box opening, the plurality of dividers sorting the plurality of parts into the plurality of alignment channels. The plurality of perpendicular dividers may include at least two sizes of divider. The base plate is inclined upright to a horizontal plane. The actuator is electrical or mechanical. The actuator is selected from the group may include: a servo, cam, rack and pinion, and pneumatic drive. The apparatus may include a sensor bar containing a plurality of presence sensors to determine when a plurality of alignment channels are full of the plurality of parts. The three-dimensional shape of the parts are selected from the group may include cylindrical, rectangular, hexagonal, and octagonal shapes. The objects have a longer length to depth ratio. Implementations of the described techniques may include hardware, a method or process, or computer software on a computer-accessible medium.

One general aspect includes an apparatus with an end gate at the end of alignment channels below a first row of a plurality of parts in an extension portion of a base plate. Other embodiments of this aspect include corresponding computer systems, apparatus, and computer programs recorded on one or more computer storage devices, each configured to perform the actions of the methods.

One general aspect includes a method of dynamic geometric sorting. The method includes receiving a plurality of parts in a receiving box positioned above a base plate having a plurality of alignment channels for receiving the plurality of parts; aligning the plurality of parts with the plurality of alignment channels by moving a box rake within the receiving box relative to the base plate along a motion profile, controlling traffic of the plurality of parts within the plurality of alignment channels to allow a first row of parts ready to be removed/released. Other embodiments of this aspect include corresponding computer systems, apparatus, and computer programs recorded on one or more computer storage devices, each configured to perform the actions of the methods.

Implementations may include one or more of the following features. The method where controlling the traffic of the plurality of parts further may include: detecting when the plurality of parts has been sorted into the plurality of alignment channels, and releasing the detected plurality of parts from the base plate when all the plurality of alignment channels are full. The box rake has a plurality of dividers substantially perpendicular to the base plate aligned between the plurality of alignment channels of the base plate position within the receiving box. The motion profile moves the box rake at a first speed while moving up the incline of the base plate and allows the box rake to move at a second speed while moving down the incline of the base plate. Controlling traffic may include a hold down bar retaining a second row of the plurality of parts. Controlling traffic may include extending an end gate to create a gap between the first row and second row of the plurality of parts to allow a first row of the plurality of parts ready to be removed. May include detecting a sorting status of the plurality of parts in the plurality of alignment channels. The method may include pausing receiving plurality of parts or pausing moving the box rake when all the plurality of alignment channels are full. The plurality of parts each have a longer length to depth ratio. Implementations of the described techniques may include hardware, a method or process, or computer software on a computer-accessible medium.

The following description is provided to enable any person skilled in the art to make and use the invention and is provided in the context of a particular application and its requirements. Various modifications to the embodiments will be readily apparent to those skilled in the art, and the generic principles defined herein may be applied to other embodiments and applications without departing from the spirit and scope of the invention. Thus, the present invention is not intended to be limited to the embodiments shown but is to be accorded the widest scope consistent with the principles and features disclosed herein.

The present disclosure provides a dynamic geometric sorting apparatus and method for sorting parts so such that they are aligned in a consistent manner. The apparatus comprises a receiving box, a baseplate, a box rake, and an actuator. The receiving box has an opening for receiving a plurality of parts and an output opening at a first end. The baseplate is positioned beneath the receiving box, and comprises a plurality of alignment channels for receiving the plurality of parts. The box rake may further comprise a plurality of dividers that are substantially perpendicular to the baseplate aligned between the plurality of alignment channels of the baseplate positioned within the receiving box opening. The plurality of dividers sort the plurality of parts into the plurality of alignment channels. The actuator moves the box rake relative to the baseplate along a motion profile where the box rake moves slowly up the incline and moves quickly down the incline leaving the parts behind allowing them to fall down the incline against the plurality of perpendicular dividers. The perpendicular dividers align the plurality of parts with the plurality of alignment channels. The baseplate and the plurality of alignment channels extend beyond a length of the receiving box, further comprising an extension portion allowing a sorted plurality of parts to exit from the receiving box via the output opening at the first end.

The apparatus further comprises a moveable end gate at the bottom end of the baseplate where multiple items of parts travel down along the alignment channels and reach the end gate at the end of baseplate. A pick-up device, such as such as a gripper assembly, approaches the parts in the bottom, or first row, at the end of baseplate, while hold down bar retains parts in the second row. The end gate further advances a distance downward to extend the length of the base plate to create a gap between parts in the first row and the second row, so the parts in the first row could be safely picked up. The movement of the end gate relieves any friction between adjacent end portions of first row parts and second row parts. The apparatus also comprises a sensor bar that contains a plurality of part presence sensors to determine if additional cycles of the motion profile are required to add additional parts to the channels. The part presence sensor part presence detection sensor is a device used to detect the presence or absence of objects within a certain range with or without any physical contact. For example, the part presence detection sensors can include non-contact sensors (laser, ultrasonic, inductive, capacitive, photo optic, or other types of presence sensors). The part presence detection sensors can include optical sensors such as vision camera. The part presence detection sensors can include mechanical contact sensors.

The method outlined involves a dynamic geometric sorting system. Initially, a variety of parts are collected into a receiving box situated above a base plate, which is designed with multiple alignment channels to accommodate the parts. To sort the parts, a box rake is moved along a motion profile in the receiving box's incline by an actuator. This actuator is programmed with a motion profile that propels the rake upwards along the incline and then allows it to descend down the incline. The system includes sensors to detect when the parts have been successfully sorted into the alignment channels or when additional cycles of the motion profile are required to fill the alignment channel with parts.

Alternatively when channels are at least partially filled with sorted parts they can be released from the base plate and removed by for example a mechanical gripper. This method ensures efficient sorting of parts based on their geometric properties. A 2^{nd} row of the plurality of parts is released by the raising of the hold down bar and are retained by a hold down bar when engaged. The motion of the box rake is halted prior to the raising of the hold down bar. The actuator can be electrical or mechanical, such as but not limited to a cam or a linear mechanism, a servo, a rack and pinion or pneumatic drive providing a motion profile which is slow on the up stroke while providing a faster motion on the down stroke thus leaving the parts behind and allowing them to fall down the incline of the base plate by their own weight and gravity.

The present disclosure has the advantages of high efficiency, low cost, simple structure, easy operation, and low maintenance. The apparatus can sort parts of different sizes and shapes, such as but not limited cylindrical, rectangular, hexagonal, and octagonal but in particular cylindrical articles such as, but not limited to, cans, bottles, tubes, rods, injector bodies, syringes, pens, straws, etc.

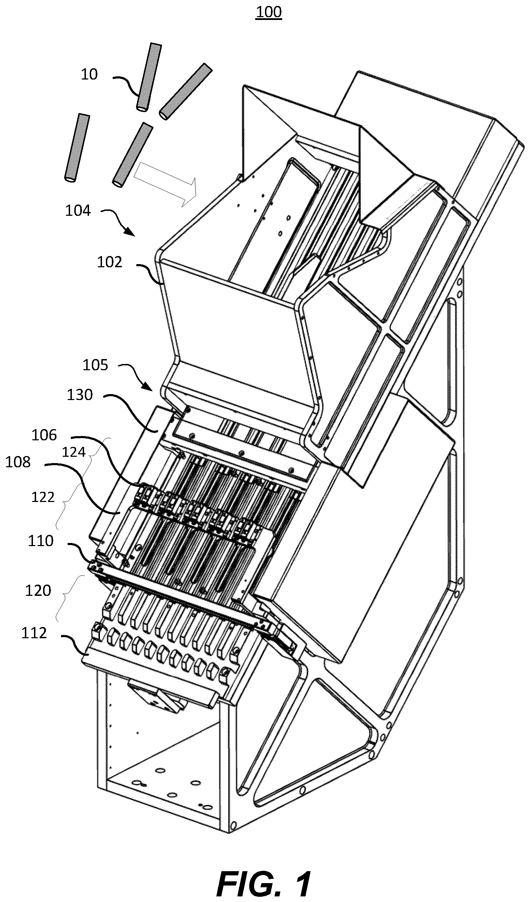

Referring to FIG. 1, a dynamic geometric sorting apparatus 100 according to an embodiment is shown. The apparatus 100 comprises a receiving box 102, for receiving the parts via an opening 104. The parts 10 are placed in the receiving box 102 in random orientations, such as for example by pouring a bag of parts into the opening 104. An output opening 105 of the receiving box 102 outputs the sorted plurality of parts 10. The receiving box 102 can have any suitable shape and size, such as a rectangular, square, or circular shape, and can be made of any suitable material, such as metal, plastic, or wood.

The base plate 106 is positioned beneath the receiving box 102 opposite or adjacent to the opening 104 and comprises a plurality of alignment channels for receiving the plurality of parts 10. The box rake 130 can be fixed or movable relative to the receiving box 102, is positioned within the receiving box 102, and can be driven by an actuator. The base plate 106 is inclined to facilitate the parts 10 to slide down alignment channels arranged thereon. In the example described here the base plate operates at 45 degrees. Other angles can be applied to optimize the efficiency for other parts or products and may vary based upon the weight and dimensions of the parts 10 being sorted.

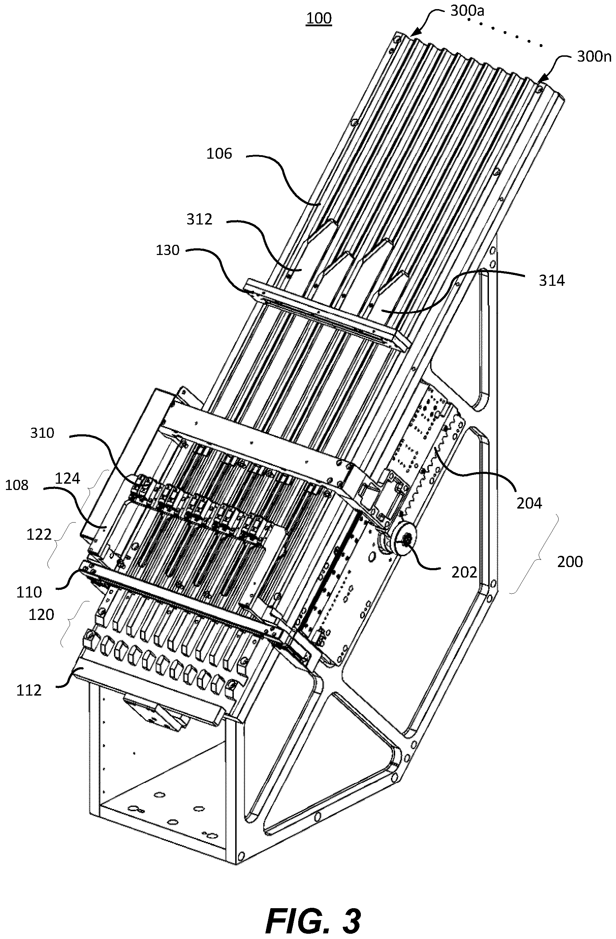

The box rake 130 moves within, or with, the receiving box 102 having geometric features therein, as will be described in connection with FIG. 3, which forces the cylindrical objects 10 to be aligned with alignment channels formed on or in the base plate 106. The parts 10 are sorted until row 124, in this example the 3^{rd} row but can be any row above the 2^{nd} row 122, is full as determined by a sensor bar 108. A end gate 112 at the bottom of the base plate 106 keeps the sorted parts in the 1^{st} row 120 in position until they can be removed. While end gate 112 is lowered, the hold down bar 110 retains the 2^{nd} row by pressing the parts 10 against the baseplate 106. The lowering of the end gate 112 provides an opening allowing the parts 10 in the 1^{st} row 120 to be removed from the apparatus 100 for further processing by a means such as mechanical grippers.

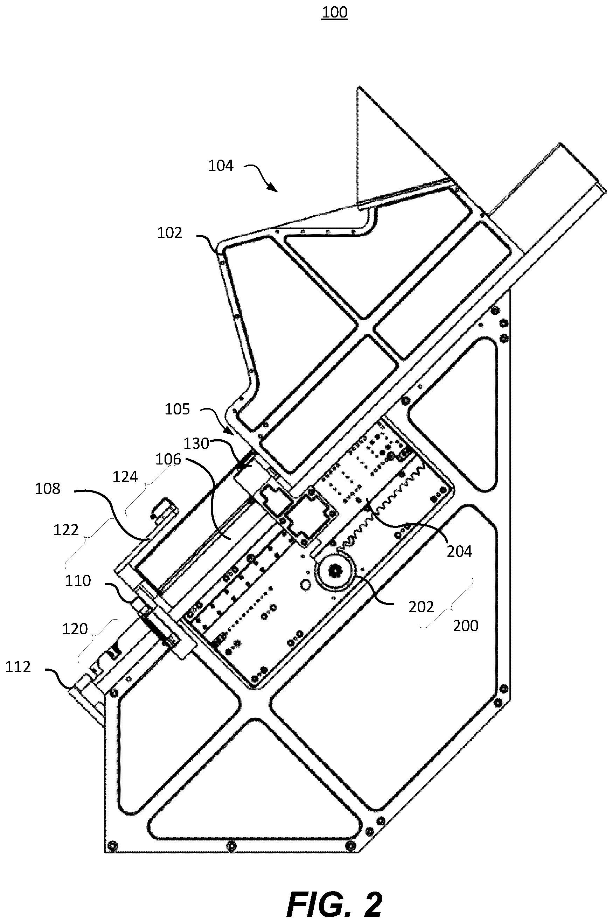

As shown in FIG. 2, the box rake 130 is driven by an actuator 200, comprising a rack 204 and pinion 202 allowing movement of the box rake 130 up and down the base plate 106 following the incline of the sorting device 100. The actuator 200 may alternatively be provided by other means such as but not limited to a cam, servo, linear actuator, rack and pinion, follower, a spring, a hydraulic or pneumatic system, or any other suitable means. The motion profile of the actuator facilitates agitation of the parts 10 and forces alignment of the parts 10 with alignment channels within the base plate 106. The travel of the box rake 130 is sufficient to impart enough movement to any parts 10 in the receiving box 102 so that they do not remain stationary on the down stroke of the box rake 130. The amount of travel required can be determined in relation to the length and weight of the parts 10. The box rake 130 is driven by a motion profile where it moves slowly up the incline of the base plate 106 to avoid excess jostling and moves more quickly, or abruptly down the incline of the base plate 106 imparting motion on the parts within the sorting device and facilitating alignment with the alignment channels 130. The motion profile uses the parts weight and gravity rather than using jostling or shaking from an external source.

The sensor bar 108 is positioned above the 2^{nd} row 122, such as for example the 3^{rd} row 124, but may be in higher rows such as the 4^{th}, 5^{th} or 6^{th}, etc., rows. to detect if a part 10 is in the alignment channels. While the 2^{nd} row 122 is retained by the hold down bar 110, the end gate 112 can be extended to release the parts 10 in the 1^{st} row 120.

As shown in FIG. 3 the plurality of alignment channels 300a...300n are formed along the length and on the surface of the base plate 106 and are parallel to each other and to the lower portion of the receiving box 102. The plurality of alignment channels 300a...300n have a width that is slightly larger than the diameter of the plurality of parts 10, and a depth that is slightly smaller than the diameter of the plurality of parts 10. The plurality of alignment channels 300a...300n are configured to receive and align the parts 10.

The plurality of alignment channels 300a...300n are configured to receive and align the plurality of parts 10 in a single row along the first end of the receiving box 102 in the 1^{st} row 120. The base plate 106 and the plurality of alignment channels 121 extend beyond a length of the receiving box 102, further comprising an extension portion that allows a sorted plurality of parts 10 to exit from the receiving box 110 via the output opening 105 at the first end.

The box rake 130 comprises a plurality of dividers 312/314 that are perpendicular to the base plate 106 aligned between the plurality of alignment channels 300a...300n of the base plate 106 positioned within the receiving box 102. The plurality of dividers 312/324 sort the plurality of parts 10 into the plurality of alignment channels 300a...300n of the base plate 106.

The plurality of dividers 312/314 are spaced apart from each other by a distance that is slightly smaller than the length of the plurality of parts 10. The plurality of dividers 312/314 are configured to separate and guide the plurality of parts 10 into the plurality of alignment channels 121. The plurality of dividers 312/314 can have different sizes or shapes, such as vane-shaped, wedge-shaped, or curved-shaped, to accommodate different sizes or shapes of the plurality of parts 10. As show in FIG.3 the dividers 312/314 are at least provided in two sizes, a long profile divider 312 and a short profile divider 314 which provide a staggered plane which forces the parts into alignment with the alignment channels 300a...300n and the box rake moves up and down the incline of the base plate 106. The dividers 312/314 are arranged so that the cylindrical objects are stopped from being setting into horizontal positions.

The actuator 200 moves the box rake 130 relative to the opening 104 of the receiving box 102, wherein the plurality of perpendicular dividers 312/314 align the plurality of parts 10 with the plurality of alignment channels 300a...300n. The actuator 200 can be any suitable device that can provide a vertical or horizontal motion to the box rake 130. The actuator 200 can move the box rake 130 in a periodic or continuous manner, depending on the speed and frequency of the input and output of the plurality of parts 10. The actuator 200 can also adjust the amplitude of the motion of the box rake 130, depending on the size and shape of the plurality of parts 10 and the rate at which the receiving box 102 is filled. In an embodiment the box rake 130 moves in a motion profile at a first speed on the upward motion and at a second speed on the downward motion, wherein the second speed is faster that the first speed allowing the parts to fall within the receiving box and interacting with dividers aligning the parts into the alignment channels. The second speed drops the box rake and the articles quickly, momentarily suspending the parts allowing them to be reoriented and to be realigned by the dividers 312/314.

The hold down bar 110 is positioned above the base plate 106 near the first end of the receiving box 110 and is parallel to the plurality of alignment channels 300a...300n. The hold down bar 110 is configured to retain a 2^{nd} row 122 of the plurality of parts 10 while a 1^{st} row 120 of the plurality of parts 10 is removed. The hold down bar 110 can be fixed or movable relative to the receiving box 102, and can be driven by a motor, a spring, a hydraulic or pneumatic system, or any other suitable means.

The hold down bar 110 is dis-engaged when the end gate 112 is in the up position. The hold down bar 110 is engaged while the 1^{st} row 120 of the plurality of parts 10 are being removed from the alignment channels of the base plate 106. The hold down bar 110 prevents the second row 122 of the plurality of parts 10 from interfering with the removal of parts 10 from the first row 120.

The sensor bar 110 is positioned above the base plate 120 near the second end of the receiving box 102 and is perpendicular to the plurality of alignment channels 300a...300n.

The sensor bar 108 contains a plurality of sensors 310, such as photoelectric sensors that are aligned with the plurality of alignment channels 300a...300n. The plurality of sensors 310 are configured to detect the presence or absence of the plurality of parts 10 in the plurality of alignment channels 300a...300n. Additional sensors may be utilized to facilitate detection of parts in certain rows, such as for example a camera.

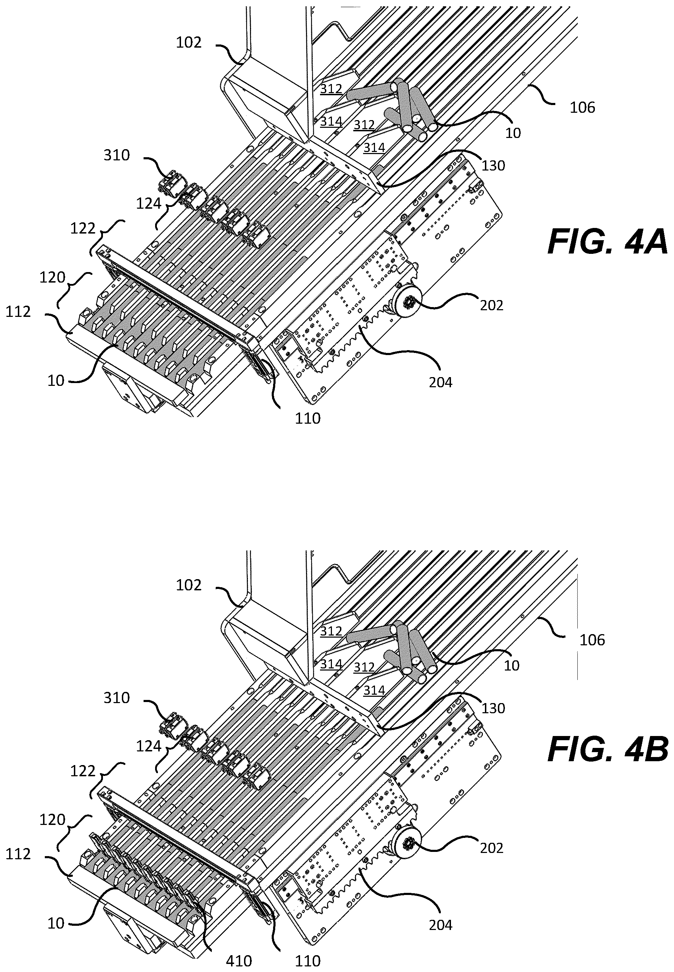

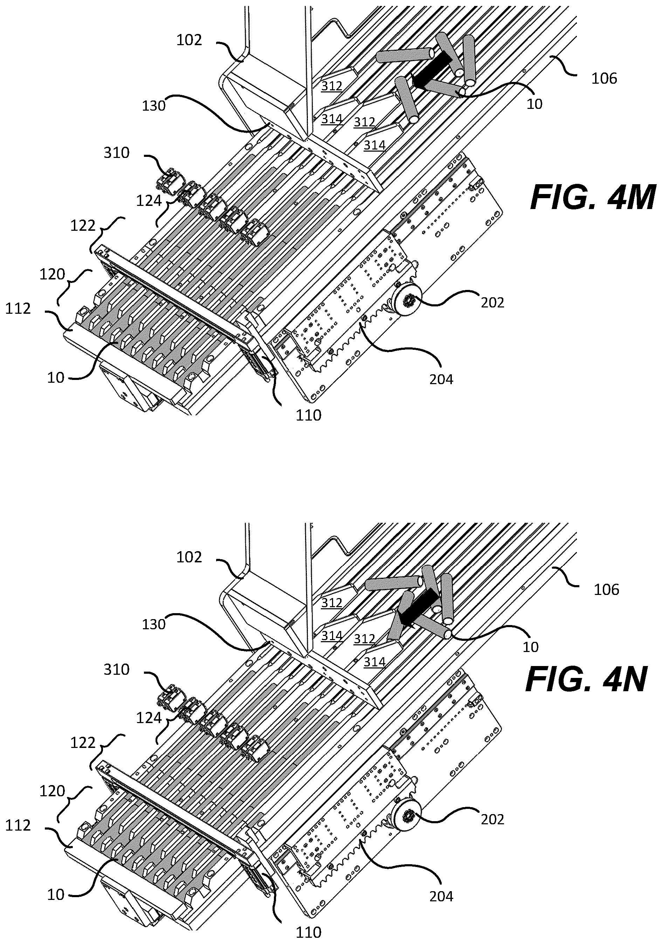

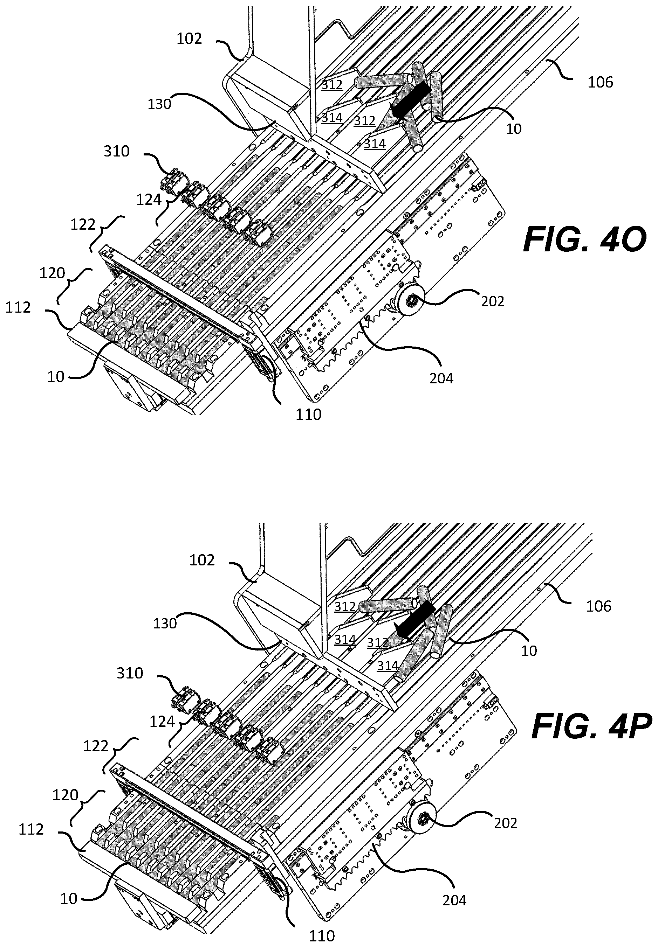

FIG. 4A-Q are representation of the stages of operation of the geometric sorting apparatus of FIG. 1. With reference to FIG. 4A, the 1^{st} row 120 is ready to be removed.

With reference to FIG. 4B, mechanical grippers 410 arrive at each of the channels of the first row 120 to extract the parts. The mechanical grippers 410 grip the plurality of parts.

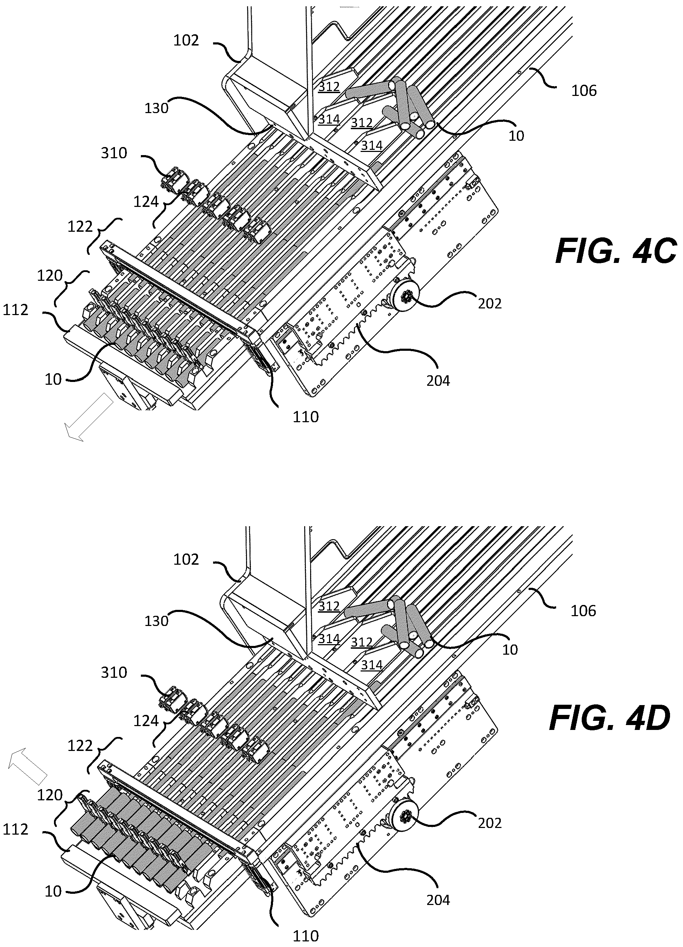

With reference to FIG. 4C, the hold down bar pushes the 2^{nd} row of parts 122 against the back of the of the base plate. The mechanical grippers 410 move downward toward the parts and the end gate 112 moves downward creating or extending a gap between the 1^{st} row 120 and the 2^{nd} row 124 relieving any friction between parts.

With reference to FIG. 4D, the gripers 410 then lift the parts 10 to remove them from the sorting apparatus.

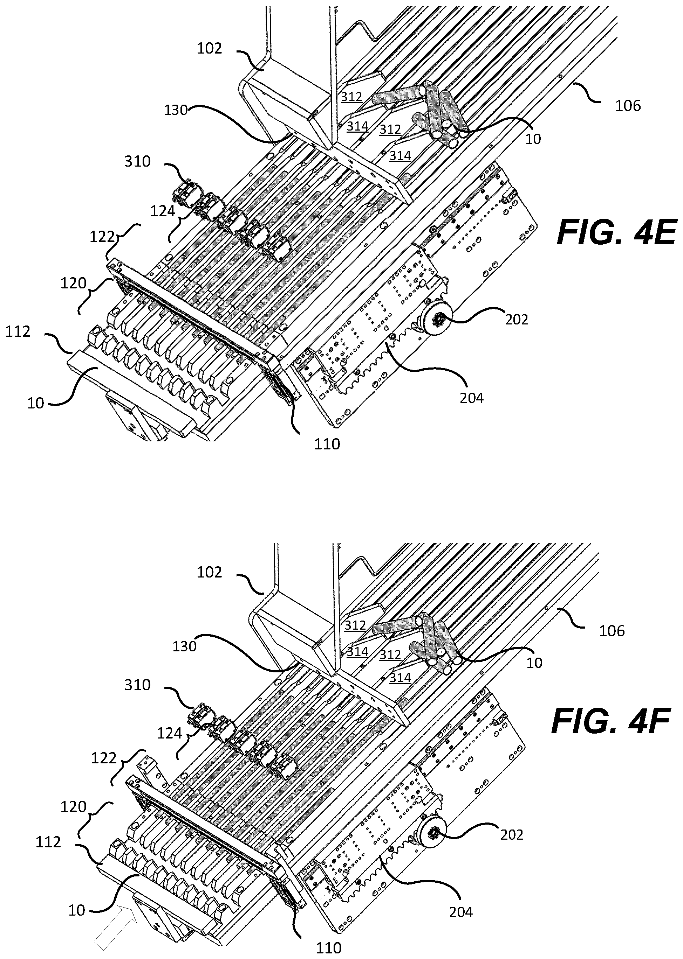

With reference to FIG. 4E, the first row 120 is empty. The hold down bar is holding back the second row 122 of parts.

With reference to FIG. 4F, the end gate 112 moves back up.

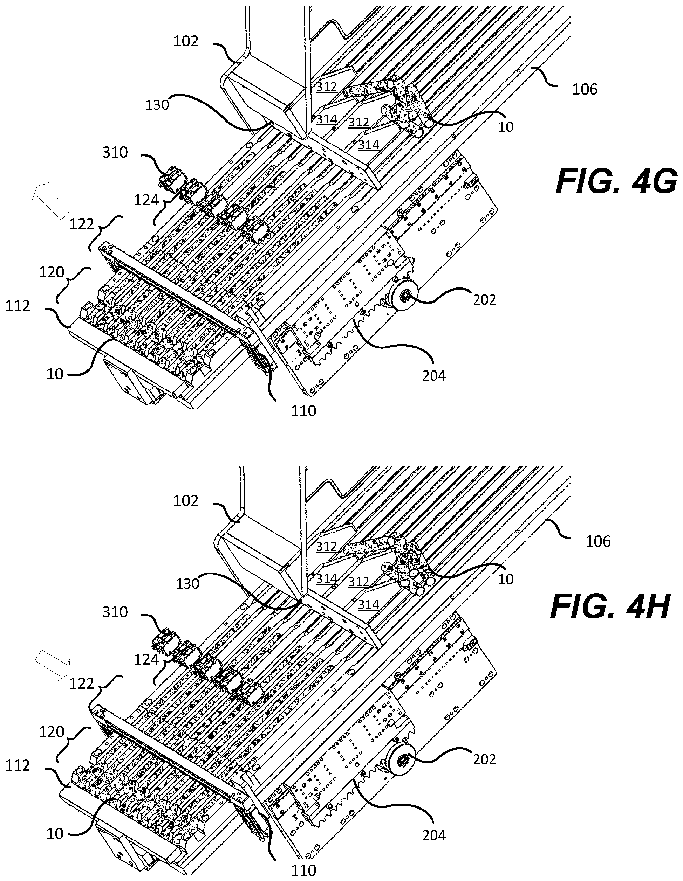

With reference to FIG. 4G, the hold down bar 110 is raised allowing movement of the 2^{nd} row 122 of parts into the first row 120.

With reference to FIG. 4H, the 2^{nd} row 122 slides into the 1^{st} row position 120 against end gate 112. The 3^{rd} row 124 slides down to the 2^{nd} row 122. After the parts reach the end gate 112 the hold down bar 110 lowers pushing the 2^{nd} row 122 of parts against the base plate holding back the 2^{nd} row 122 of parts. The sensors 310 inspects lanes in row 124 to determine if any lane requires additional parts. In this example the 10^{th} row 300n closest to the actuator 202 is empty.

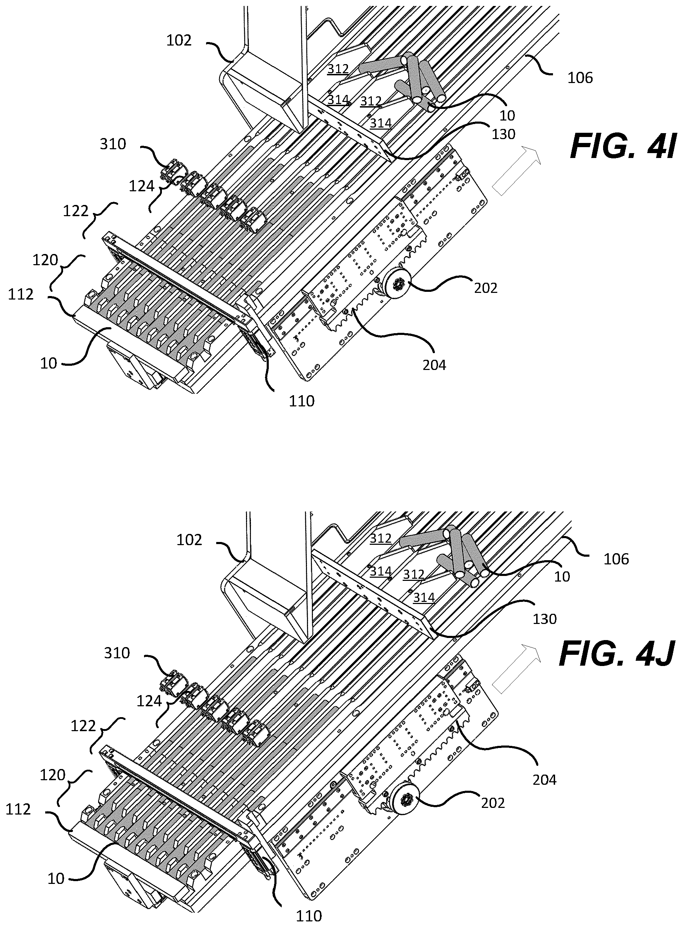

With reference to FIGs. 4I and 4J, the motion profile is applied to move the box rake 130 up the incline of the base plate 106 at a slow rate to avoid excess jostling of the parts.

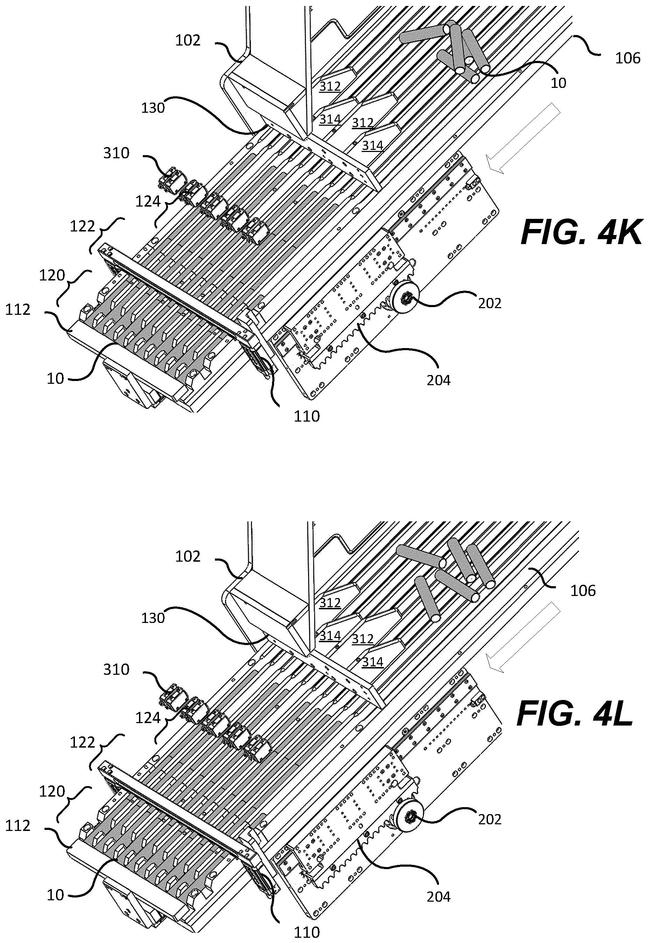

With reference to FIG. 4K, the motion profile is applied to move the box rake 130 at a fast rate back down the incline leaving the part 10 behind within the receiving box 102.

With reference to FIGs. 4L-4P, the part 10 drop/slides down the incline into the box rake which sorts the parts by aligning the parts with channels 300a-300n of the base plate 106 by their own weight and gravity.

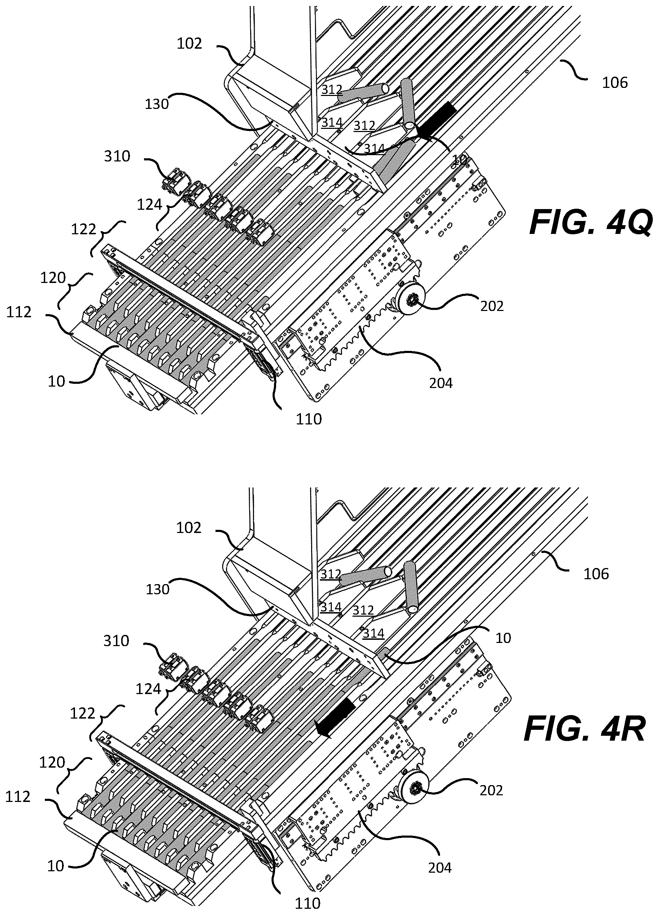

With reference to FIG. 4Q, the parts fall into the alignment channels 300a-300n, in this example the 10^{th} row 300n, of the base plate 106 filling up the 3^{rd} row 124.

With reference to FIG. 4R, sensors then inspect 310 then the lanes of the alignment channels 300a-300n to determine if any lane requires more parts. If additional product are required the motion profile is applied again.

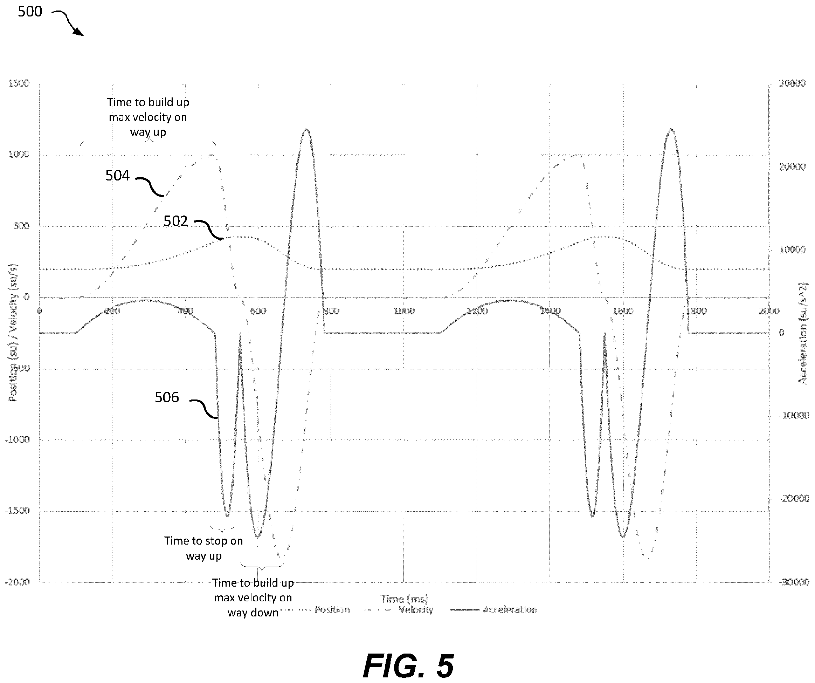

With reference to Fig. 5, an example of a motion profile 500 is shown. The motion profile comprises a position profile 502, wherein a time duration t₁ for moving up is longer than a time duration t₂ for moving down, preferably t₁ : t₂ >2. However, times are set to keep acceleration during t1 in a range such that the parts experience controlled acceleration of 1 to 2 g's, where t₂ can be as fast as needed, provided the parts don't incur the possibility of damage.

The motion profile comprises a velocity profile 504, wherein the build up time t₁ to reach a maximum velocity V1 moving up is much longer than the time to stop t₂ while moving up, preferably t₁>5t₂.

The motion profile comprises an acceleration profile 506, wherein a time duration t₃ for reaching a maximum velocity value V1 is longer than a time duration t₄ for reaching a maximum velocity value V2, preferably t₃>3t₄.

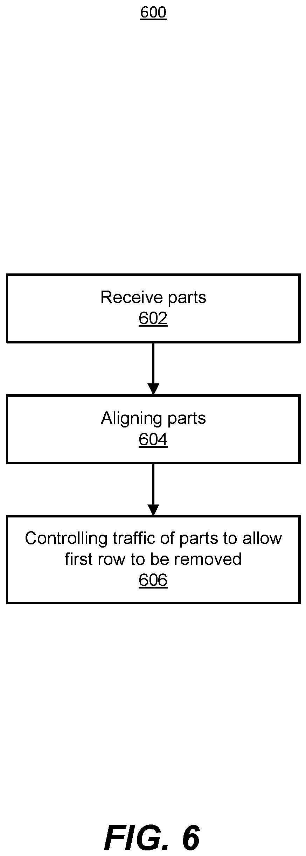

The operation of the apparatus 100 will now be described with reference to FIG. 6, which is a flowchart of a method 600 of dynamic geometric sorting according to an embodiment of the disclosure. The apparatus 100 receives a plurality of parts 10 in the receiving box 102 via the opening 104 (602). The plurality of parts 10 can be input manually or automatically, using a conveyor belt, a hopper, a chute, or any other suitable means.

The apparatus 100 aligns the plurality of parts by applying a motion profile to the actuator (604) moving the plurality of parts 10 by moving the box rake 130 vertically in the defined motion profile along the incline of the base plate 106 within the receiving box 102. The actuator 200 drives the box rake 130 up along the incline at a first speed and down relative to the opening 104 of the receiving box 102. The plurality of perpendicular dividers 312/314 separate and guide the plurality of parts 10 into the plurality of alignment channels 300a...300n of the base plate 106. The agitation of the box rake 130 can be periodic based upon coordination with the end gate 112 actuation or continuous operation, depending on the speed and frequency of the input and output of the plurality of parts 10. The box rake 130 may move more quickly on the down stroke to facilitate movement of the parts 10 into channels 300a...300n by interaction of the dividers 312/314.

The traffic or movement of the plurality of parts is controlled (606) within the plurality of alignment channels to allow a first row of parts ready to be removed/released. This may be provided by the apparatus 100 detecting a sorting status when the plurality of parts 10 has been sorted into the plurality of alignment channels 300a...300n within the 3^{rd} row 124. The sensor bar 108, or other sensors within other rows the apparatus, monitors the presence or absence of the plurality of parts 10 in the plurality of alignment channels 300a...300n, using the plurality of photoelectric sensors 310. The sensor bar 108 determines when all the plurality of alignment channels 300a...300n in the 3^{rd} row 124 are full or when additional product is required for empty rows, and thus the 1^{st} row 120 and 2^{nd} row 124 are full.

The apparatus 100 releases the 1^{st} row 120 of sorted articles by lowering an end gate 112 which extends the length of the base plate 106. The stop bar 112 allows the 1^{st} row 120 of sorted articles 10 to be moved downwards from the hold down bar 110 allowing for removal of the sorted articles 10 by extending past the alignment channels 300a...300n to allow a gripping of the parts 10. The end gate 112 can then be retracted.

The process then repeats as additional parts are added to the receiving box 102 until sensors detect that the channels are full. The hold down bar 110 can then be raised releasing the row of cylindrical article 10 from the 2^{nd} row 122 to the 1^{st} row 120. The hold down bar 110 can then be re-engaged to stop additional articles from moving down the channels 300a-300n.

Additional or alternatively, the picking up the parts from specific channels may be performed where there are sensors indicating there are parts in the corresponding channels in the 1^{st} row 120 and as to whether the gripper fingers should be closed or not closed accordingly. Further the result of sensor detection can be used to determine the performance of sorting device and (based on machine learning) modify the applied motion profile to fine-tune the sorting device. The operation of the method can be performed by a controller or computer processor coupled to the apparatus 100. The processor is coupled to the sensors 310 of the sensor bar 108 to detect the parts 10. In response to detecting the parts 10, actuators are be activated by the processor to raise and lower the hold down bar 110 and to extend and retract the end gate 112 and control the actuation of the motion profile. The motion of the box rake 130 may be synchronized with the movement of the hold down bar 110 and the end gate 112.

The disclosure has been described with reference to a preferred embodiment, but it should be understood that various modifications and variations can be made without departing from the scope of the invention. For example, the shape, size, number, arrangement, or material of the components of the apparatus 100 can be changed or modified according to the design or application requirements. The actuator 200 can be replaced or combined with other types of devices that can provide a vertical or horizontal motion to the box rake 130. The sensor bar 108 can be replaced or combined with other types of devices that can detect the presence or absence of the plurality of parts 10 in the plurality of alignment channels 300a...300n. The hold down bar 110 can be replaced or combined with other types of devices that can retain or release the plurality of parts 10 from the base plate 120. The method of dynamic geometric sorting can be modified or varied according to the operation or performance requirements. The invention is not limited by the embodiments described above, which are presented as examples only but can be modified in various ways within the scope of protection defined by the appended patent claims.

A system of one or more computers can be configured to perform operations or actions by virtue of having software, firmware, hardware, or a combination of them installed on the system that in operation causes or cause the system to perform the actions. One or more computer programs can be configured to perform operations or actions by virtue of including instructions that, when executed by data processing apparatus, cause the apparatus to perform the actions. Other embodiments include corresponding computer systems, apparatus, and computer programs recorded on one or more computer storage devices, each configured to perform the actions of the methods.

The accompanying drawings illustrate various embodiments of the invention. The drawings are provided for illustrative purposes and are not intended to limit the scope of the invention.

The invention is not limited to the specific embodiments described herein. Various modifications and changes can be made without departing from the scope of the invention, which is defined solely by the appended claims.

The claims define the scope of the invention and are intended to cover all novel and non-obvious aspects of the invention. The claims should be interpreted broadly to encompass all variations and modifications that fall within the spirit and scope of the invention.

## Claims

1. A dynamic geometric sorting apparatus comprising:
a receiving box having an opening for receiving a plurality of parts and an output opening at a first end;
a base plate positioned beneath the receiving box, the base plate comprising a plurality of alignment channels for receiving the plurality of parts on an incline;
a box rake within the receiving box travelling along a length of the base plate; and
an actuator for moving the box rake along a motion profile relative to the base plate to align the plurality of parts with the plurality of alignment channels, wherein the box rake is driven along the motion profile to move up the incline of the base plate and down the incline of the base plate;
wherein the base plate and the plurality of alignment channels extend beyond a length of the receiving box further comprising an extension portion allowing a sorted plurality of parts to exit from the receiving box via the output opening at the first end.

2. The apparatus of claim 1 wherein the box rake is driven along the motion profile at a first speed while moving up the incline of the base plate and at a second speed while moving down the incline of the base plate.

3. The apparatus of claims 1 or 2 further comprising a hold down bar retaining a second row of the plurality of parts while a first row of the plurality of parts in the extension portion is removed from the base plate.

4. The apparatus of claim 3 further comprising an end gate at the end of the alignment channels below the first row of the plurality of parts in the extension portion of the base plate, the end gate configured to extend to create a gap between the first row and the second row of the plurality of parts while the first row of parts are ready to be removed.

5. The apparatus of any one of claims 1 to 4 wherein the box rake further comprises a plurality of substantially perpendicular dividers to the base plate aligned between the plurality of alignment channels of the base plate positioned within the receiving box opening, the plurality of dividers sorting the plurality of parts into the plurality of alignment channels, in particular the plurality of perpendicular dividers comprises at least two sizes of divider and the base plate is inclined upright to a horizontal plane.

6. The apparatus of any one of claims 1 to 5 wherein the actuator is selected from the group comprising: a servo, cam, rack and pinion, and pneumatic drive.

7. The apparatus of any one of claims 1 to 6 further comprising a sensor bar containing a plurality of presence sensors to determine when a plurality of alignment channels are full of the plurality of parts.

8. The apparatus of any one of claims 1 to 7 wherein the three-dimensional shape of the parts are selected from the group comprising cylindrical, rectangular, hexagonal, and octagonal shapes and/or the objects have a longer length to depth ratio.

9. A method of dynamic geometric sorting comprising using the apparatus of any one of claims 1 to 11, the method comprising:
receiving a plurality of parts in a receiving box positioned above a base plate having a plurality of alignment channels for receiving the plurality of parts;
aligning the plurality of parts with the plurality of alignment channels by moving a box rake within the receiving box relative to the base plate along a motion profile;
controlling traffic of the plurality of parts within the plurality of alignment channels to allow a first row of the plurality of parts ready to be removed/released.

10. The method of claim 9 wherein controlling the traffic of the plurality of parts further comprises:
detecting when the plurality of parts has been sorted into the plurality of alignment channels; and
releasing the detected plurality of parts from the base plate when all the plurality of alignment channels are full, or partially full.

11. The method of claims 9 or 10 wherein the motion profile moves the box rake at a first speed while moving up the incline of the base plate and allows the box rake to move at a second speed while moving down the incline of the base plate.

12. The method of any one of claims 9 to 11 wherein controlling the traffic comprises a hold down bar retaining a second row of the plurality of parts.

13. The method of claim 12 wherein controlling the traffic further comprises extending an end gate to create a gap between the first row and the second row of the plurality of parts to allow the first row of the plurality of parts ready to be removed.

14. The method of any one of claims 9 to 13 further comprising detecting a sorting status of the plurality of parts in the plurality of alignment channels.

15. The method of claim 14 further comprising pausing receiving plurality of parts or pausing moving the box rake when all the plurality of alignment channels are full.
